# EUROPEAN PATENT SPECIFICATION

(11) **EP 0 988 743 B1**
(45) Date of publication and mention of the grant of the patent: **23.10.2002**
(21) Application number: 98912700.6
(22) Date of filing: 20.03.1998
(51) Int. Cl.: H04M 3/50, G07F 17/32, G07F 7/00

(54) **ACCESS MEANS TO INTERACTIVE SERVICE FOR THE TELEMATIC STAKING IN GAMES BASED ON FORESCASTS**
ZUGRIFFSMITTEL FÜR INTERAKTIVEN TELEMATISCHEN WETTEINSATZ BEI EINEM VORHERSAGESPIEL
UNITE D'ACCES A UN SERVICE INTERACTIF PERMETTANT DE MISER PAR VOIE TELEMATIQUE DANS DES JEUX FONDES SUR DES PREVISIONS

(30) Priority: 13.06.1997 IT RM970353
(43) Date of publication of application: 29.03.2000
(73) Proprietor: Telecom Italia S.p.A., 00196 Roma (IT)
(72) Inventor: GIOVANNELLA, Fabio, I-00184 Roma (IT)
(74) Representative: Fiammenghi-Domenighetti, Delfina
(86) International application number: IT9800065
(87) International publication number: WO98042117

(56) References cited:
- WO-A-93/05483
- FR-A- 2 701 181
- US-A- 5 083 272
- US-A- 5 327 485
- US-A- 5 472 209
- US-A- 5 518 253
- US-A- 5 569 083

## Description

### Technical field

The present invention generally relates to the field of public telematic services provided on the telephone network. In particular, it relates to an interactive service for the telematic management of stakes in games based on forecasts, which allows the player to automatically stake by performing a telephone call, using access means to the stake operation, which are of the prepaid kind, usually comprising a prepaid card.

### Background Art

At the present state of the art, even if the need to automatize the stakes in prediction-based games is felt by many companies, no proposal has been made till now which eliminates completely the operator's assistance. Until now the player is not able to stake in an interactive manner, by himself, at any our of the day and from a site outside the lottery office.

As known from the lottery game, the stakes are performed inside the lottery office by:
- filling in a card;
- transmitting the data to a data collection centre;
- handing over the receipt which serves as a proof that the stake has been done.

This game system does not allow the user to stake without the operator's assistance, nor to stake at any hour of the day, from home or from any other place which is distant from the lottery office.

With regard to games involving forecasts, like "totocalcio" and "totogol", the stake is performed in a lottery office, tobacco shop or the like, where a sheet of paper which comprises a receipt for the user and a matrix, is certified by a data processing device provided for this purpose. The latter is also able to store on magnetic memories the content of the stake itself. Therefore, in this case too, in order to be able to stake, the user must necessarily go to the lottery office or the like at certain hours of the day.

Lottery offices are also known in which the user delegates somebody else to stake, so that -for example- the user dictates his stake (or set of numbers) to an operator, or sends a facsimile, etc.

Also this solution does not render the stake fully automatic in that it puts an operator between the user and the storing system, said operator being moreover delegated for this job. Moreover, it involves abvious risks due to the presence of an intermediary, with an evident psychological insecurity which could discourage the user.

The US patent 3,327,485 (Leaden, Pacific Bell) relates to telephone lottery systems allowing partecipants to enter lottery plays by use of a telephone. Playslip booklets are printed with bar code and numeric identification plus individual ticket identification numbers on each playslip. To play the bettor calls the telephone lottery computer and provides the booklet identification number and a PIN, which is provided previously at the purchase when the booklet is authorized for play through a call to the telephone lottery computer.

This system has the drawback of requiring a validation of each booklet by means of a telephone call to the Service Center. Furthermore it doesn't let the bettor use a personal stake identification number which is not assigned preliminary to the card but only when the stake is performed.

The object of the present invention is to provide a system for a completely automatic interactive service which constitutes a completion of the stake data collection systems used nowadays. This system must allow to stake, in games based on forecasts, by using the telephone, prepaid cards, rechargeable cards, or credit cards, etc. (in the following we speak only of prepaid cards) as payment means through stake identification number for validation provided by the user in order to improve the system security and to give psychological insecurity to the user. A further object of the present invention is to provide a completely automatic telematic interactive system for the stakes in games based on forecasts, which is available during the whole 24 hour period, wherein the service is extended until a few hours before the end of the game, renders the stake easy to perform and allows a distribution extending everywhere in the territory.

Still a further object of the present invention is to provide an interactive telematic automatic service for the stakes in games based on forecasts, which is realized according to existing rules and laws and giving to the manager of the game a full visibility on the operations.

A last object of the present invention is to provide means which serve to realize an interactive, telematic, and automatic service for the stakes in games based on forecasts, said means being based on networks, telephone networks, network protocols, storing supports and complementary software, which are of the standard kind in the telematic field, in order to obtain a reliable system which is easy to manage.

### Disclosure of the Invention

These and other objects, which will become clear in the course of the description, are attained through a method using an interactive and telematic system for the automatization of the stakes in games based on forecasts, wherein said system comprises:
I) a Service Center;
II) a public wide area network to interconnect the user to the Service Center;
   and uses prepaid cards as a payment means; said Service Center being provided with software means in order to carry out the following method steps:
   A) manage the access requests of the users;
   B) instruct the user during the whole procedural path which is foreseen for the stake;
      B-1) identify the card and check its validity for staking;
      B-2) ask the user which type of game he intends to select;
      B-3) list all possible variants for a specific game and ask the user to select one stake;
      B-4) end the stake procedure with a confirmation,
   C) store all information related to the stakes on unerasable storage media. Each of said prepaid cards is marked by an univocal identification number obtained by a specific algorithm from the progressive number of the card, and is further provided with at least a hidden code which is uncovered at the time the winnings are collected. For each stake there occurs an interactive dialogue with the user, involving a sequence of steps in which:
      I) the user, who is connected to the Service Center, is enabled to the stake, through the transmission of the univocal identification number to the Service Center.
      II) the user is interactively instructed until he communicates the kind of stake he is interested in, and further, until he performs the stake itself;
      III) the Service Center requests for the validation of the already compiled stake, a stake pin which is furnished by the player and which is univocal and easily verifiable, due to the fact that it is associated to any kind of external means or document put in circulation and whose validity and safety is guaranteed by a public authority;
      IV) the external means wherefrom the stake PIN furnished by the player to the Service Center is obtained, at the time the stake is validated, is used together with the prepaid card and the related hidden code in order to claim the win and the collection of the winnings.

In another embodyment of said method each prepaid card is marked by an univocal identification number obtained by a specific algorithm from the progressive number of the card, and by a set of secret codes for security and confirmation contained in a matrix (mxn) which are to be communicated to the Service Center in order to participate to a single stake and for the validation of the card; cards are further provided with at least a hidden code which is uncovered at the time the winnings are collected as the identification number which is associated to the stake, the prepaid card, and the hidden code of the latter, are used as security and validation means in order to collect the winnings. Furthermore for each stake there occurs an interactive dialogue with the user, involving a sequence of steps in which:
I) the user, who is connected to the Service Center, is enabled to the stake, through the transmission of the univocal identification number to the Service Center.
II) the user is interactively instructed until he communicates the kind of stake he is interested in, and further, until he performs the stake itself;
III) for the validation of the stake, the service Center asks for the secret code contained in the matrix (mxn) of the prepaid card,
IV) the Service Center communicates to the user the identification number associated to the stake, which forms the receipt.

### Brief description of drawings

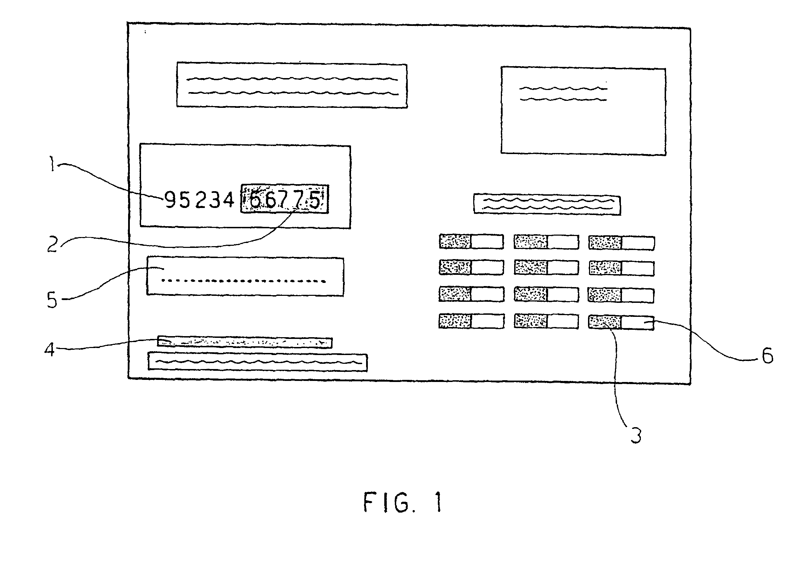

Only for illustrative purposes and without limiting in this way the generality and the possible application fields, in the following a preferred embodiment of the invention will be described with reference to Fig. 1, showing a view of the upper surface of a prepaid card according to the present invention.

### Best Mode of carrying out the Invention

With special regard to the particular application of the present invention in the field of soccer (football) games, buying a prepaid card of the kind shown in the figure, the user can stake one or more times until he reaches the maximum allowed number of columns according to the card he has purchased.

During each stake, the remaining number of columns is updated and communicated on-line.

The card is characterized in that it is not reproducible and is univocally identified by an identification number, and it provides for different kinds of stakes (Totocalcio, Totogol); it has a unique size but different embodiments (e.g. 25 columns, 50 columns, 100 columns, ...).

The aforesaid unique way of identifying the card occurs according to:
- a progressive number 1 which is visible on a light background;
- an identification number 2 which can be uncovered only by the user;
- n disposable codes (mxn matrix) 3, which remain hidden (which could be uncovered for instance by scraping);
- a code 4 which is hidden by a film and which is associated to the wording "beware, do not scrape here". Moreover, on the card there may be provided a free space 5 which is designed for carrying personal data of the user, who may for instance put his signature or the like, and adjacent to each disposable code 3 there is provided a box 6 whereon the user may write his identification number for the "receipt".

The different codes and identification numbers form a code system which prevents falsification of the card and frauds due to embezzlement.

The different steps of the game (stake), that is the access, stake and confirmation, are accessible in the system by the communication of the different codes.

It is possible to provide a piercing on the card, which would allow the user to tear out that part containing the disposable codes 3. In this manner it is possible to eliminate the risk of a stake done by an illegitimate owner of one of the two parts.

The association of the progressive number and of the identification number constitutes an univocal identification number for the card.

In fact, the identification number which is visible only by the user is associated to the visible (that is not hidden) progressive number, through a dedicated algorithm, during the production of the card itself.

On the other hand, the production and printing of the cards, with its identification codes which are either secret or visible, occurs in a completely automatic way, inaccessible to the operators designed for this purpose. In the same manner, also the secrecy in the generation of the disposable codes of the matrix mxn is insured, the latter being known only to the system and being managed by it, and being inaccessible to inspection by the operators designed to the production.

The national authority responsible for the games based on forecasts (which in the case of soccer is named "Comitato Olimpico Nazionale Italiano, CONI), can enter the information file at any time, which contains the number of cards which have been already produced (file of produced cards), even if said information is in any case periodically supplied thereto.

The connection to the Service Center in order to perform a stake, is obtained by dialling a telephone number which is unique for the whole national territory and which is predetermined. Once the connection has been established, the service Center instructs the user in an interactive manner to select one of the following options:
- information regarding the service presentation;
- statistical information which is useful for the predictions;
- authorization (enabling) to perform the stake and confirmation thereof.

The information regarding the service presentation is of a general kind and it relates for example to the modality and organization of the game (collection of winnings, purchase of prepaid cards, etc) and to the service costs.

The statistical information contains data of a different nature which are related to preceding games.

The authorization enabling to take part to the game is possible only to the owners of a prepaid card after communication of the univocal identification number.

The telematic stake process comprises the following steps:
1) identification of the prepaid card (to provide access to the stake);
2) selection of the stake kind;
3) stake and confirmation (validation) thereof;
4) transmission of the "receipt" and storing.

The user which is connected through its telephone apparatus to the Service Center, after the enabling (obtained by dialling the univocal identification number which is formed by the algorithmic correspondence between progressive number 1 and identification number 2), is informed about the integral value or residual value of the card (identification of the prepaid card).

The user is interactively instructed until he communicates the type of stake he desires (choice of the kind of stake) and until he effects the stake.

It is interesting to note how a system for performing an automatic and telematic management of the stakes according to the present invention, allows the interactive dialogue between the Service Center and the user, using the telephone apparatus, both by keying in specific combinations of numbers, which is done by the user, and alternatively, by the exchange of vocal messages between the user and a voice recognition system which is provided by the Service Center.

After the stake, the Service Center asks again, for the validation, the disposable code 3 which is contained in the matrix mxn (stake and confirmation).

This system of secret codes is used also by the telephone banks for order-type operations, for instance credit transfers; in the present invention this modality eliminates completely the risks due to phone tapping and to the manipulation of the value of the cards.

The mxn matrix may consist of a single element. In such a case the code is used as a password to enable the stake. This choice, even if it slightly reduces the safety of the card, it improves on the other hand the friendly use of the card itself.

The Service Center transmits to the user an identification number (PIN of the stake) associated to the performed stake and at the same time, it reduces the value of the card and stores the data of the stake together with those of the card (receipt and storage).

This identification number must be kept by the user for possible complaints.

The PIN of the stake may also be furnished by the player on demand from the Service Center. In such a case it must be univocal and easily verifiable, that is, associated to any means or document put in circulation which has a validity and safety which is assured by a public entity (for instance a series number of a banknote, etc.). The use of an external means with respect to the system, increases the safety of the service itself and could be used, together with the card ("totocard") in order to claim a possible win.

The disposable code (or the stake PIN) is the identification number through which the user is able to check again, at any time, the stake he has performed, by calling once again the Service Center.

The hidden code 4, which must be uncovered only by the treasurer at the time of collection of the winnings, reproduces the conventional association (correspondence) between the "parent" (matrix) counterfoil and its "daughter".

The reliability of the stake modalities is insured by the secrecy, the reliability of the data files and impossibility of their manipulation, by the fact that confidential data are inaccessible, and by the controlled access to the different steps which constitute the service. In this manner, the manager of the game based on forecasts, may easily control the distribution and sale of the cards, so as to periodically compare the takings related to the telephonic-stakes, with the number of issued cards.

The Service Center is the center where the stakes are directed, and in the particular application of the invention this center has the function of a Virtual Lottery Office, which has been realized ad hoc for the telephonic stakes.

The Service Center is formed by a hardware which is highly reliable, being suited to insure a service continuity during 24 hours.

It performs the following functions:
a) virtual lottery office
b) management of the production and distribution of the cards;
c) help desk.

The main functions of the Service Center comprise the management of the stakes, the management of the automatically provided information for the users, and the management of the game end, involving the production of the stake files, and lastly, the handing over of the cards or other material complying with the law.

The Service Center performs the management of the stakes, by instructing the user throughout the procedural path.

The management of the stakes already performed, which are in the form of "columns", and the protection and security mechanisms which have been already described, generates inside the Service Center the corresponding stake file.

The information of the aforesaid file which is associated to each stake, is the following: the univocal card identification number, the forecast, the column number, the disposable code, the stake identification number, and the hidden code.

Furthermore, as has been said in the foregoing paragraphs, the Service gives information regarding the modality of the Service itself, as well as statistical data which are useful for the user. The latter are updated for each game by the service center.

During the filing step, at the end of the game, for each stake there are produced all storage media which are necessary for the filing, including all information which relate the stake to the respective prepaid card.

When it is in possession of these data, the CONI, assisted by the manager of telematic stakes, performs the scrutiny and forms the list of the winning stakes comprising the information related to the associated prepaid cards.

It must be noted that with regard to the information carrier of the telephone network, the service offered by the present invention is applicable to already existing and operating infrastructure , protocols, and software.

In this respect, it must be put in evidence the possibility to employ a subsystem of the telephone call management, through the Pluritel system, which specifically transforms the voice into data in such a way as to optimize information exchange.

Moreover, it must be noted that in principle, according to the present invention, the public wide area network for interconnecting the user to the Service Center may be realized indifferently both on a fixed telephone line, or with a wireless telephone line.

The modality of collection of the winnings is associated to a very high security and prevents both the manager and the user from possible internal or external frauds.

The code system and the management of the stakes prevents any kind of reproduction and falsification of the winning prepaid cards.

For illustrative purposes, in the following there will be described a collection procedure at the treasury.

The collection occurs according to different modalities according to the different structures (organization) of the treasury, and to the amount of the winnings.

The management of the minor winnings below a certain value could be performed through a structure which is secure and extends everywhere on the territory of the nation.

This collection modality is such that in each peripheral office where the user produces his card, the operator itself can check in real time the exact correspondence between the identification data (the univocal identification number, the disposable code of the stake, or the PIN and the hidden code) and the data communicated by the service center.

As already described, the hidden code is an identification number printed on the card, which is hidden from the card owner itself.

The check procedure allows to see only the data related to that particular stake, after the correct input of the univocal prepaid winning card identification number. Provided that all parameters coincide, the user collects the winnings. Always in real-time, the operator verifies the residual value of the card, if any, and in the affirmative case this value is summed up to the winnings. The card is handed over to the user as the receipt of the payment.

The collection of the winnings exceeding a certain limit-value may again occur at counter of the treasury, with the above described procedure, or the manager may as well be entrusted according to the existing regulation.

The wide area (like Pluritel) insures the access to the service, with the safeguard, above all, of an everywhere extending network, besides its availability and its quality. The use of a network having such features and making use of the telephone apparatus and possibly of more modern interactive media, widens and diversifies the participation modalities to a game based on forecasts, independently of the kind of the terminal utilized to have access to the system (telephone, PC, etc.).

In a further embodiment, the stake may also be transmitted through a device comprising a keyboard and display (e.g. a computer), which, if appropriately designed, can help in prepairing the stake off-line, and which sends DTMF tones when it is put adjacent to a microphone of any type of telephone apparatus. In particular, once the stake has been prepared and after the player has performed the connection with the Service Center, by putting the device near the microphone of the telephone apparatus and pushing a press button, a unique sequence of DTMF tones, which comprises both the stake and the safety codes associated to the "totocard" and the stake itself, will be transmitted.

This device could also replace the totocard while containing all safety codes, including one or more recognition (identification) keys. Moreover, it could be recharged an infinite number of times by a predetermined or variable amount, by purchasing a "recharge means", for instance at a lottery office, and by calling the Service Center.

The use of this device:
- increases the safety of the whole system, since the transmitted codes are partially or totally unknown to the owner (the sending of the codes and the sending of the stake data could be effected by mean of an encryption;
- it instructs the user during preparation of the stake off-line, thereby decreasing the number of accidental keying in errors;
- it reduces the connection time with the Service Center;
- it allows every stake to be "signed" by means of an "electronic signature" which is identified only by the Service Center through an appropriate algorithm.

### Industrial Applicability

The service of the present invention allows to participate till the last minute, when the lottery offices are closed; it is also possible to stake with a few columns or to use complex integral systems.

This service is also very useful for persons having problems in displacing themselves, like handicapped people, for those having not much time available, or for those who prefer their comfort.

The features of this service, besides that of offering a typical national game to people living abroad, may undoubtedly contribute in increasing the number of stakes and in facilitating the introduction of other games.

## Claims

1. A method using an interactive and telematic system for the automatization of the stakes in games based on forecasts, wherein said systems comprises:
I) a Service Center;
II) a public wide area network to interconnect the user to the Service Center;
and uses prepaid cards as a payment means; said
Service Center being provided with software means in order to carry out the following method steps:
A) manage the access requests of the users;
B) instruct the user during the whole procedural path which is foreseen for the stake;
B-1) identity the card and check its validity for staking;
B-2) ask the user which type of game he intends to select;
B-3) list all possible variants for a specific game and ask the user to select one stake;
B-4) end the stake procedure with a confirmation,
C) store all information related to the stakes on unerasable storage media;
**characterized in** marking each of said prepaid cards by an univocal identification number (2) obtained by a specific algorithm from the progressive number (1) of the card, providing said card with at least a hidden code (4) which is uncovered at the time the winnings are collected, and inperforming for each stake an interactive dialogue with the user, involving a sequence of steps in which:
I) the user, who is connected to the Service Center, is enabled to the stake, through the transmission of the univocal identification number (2) to the Service Center.
II) the user is interactively instructed until he communicates the kind of stake he is interested in, and further, until he performs the stake itself;
III) the Service Center requests for the validation of the already compiled stake, a stake pin which is furnished by the player and which is univocal and easily verifiable, due to the fact that it is associated to any kind of external means or document put in circulation and whose validity and safety is guaranteed by a public authority;
IV) the external means wherefrom the stake PIN furnished by the player to the Service Center is obtained, at the time the stake is validated, is used together with the prepaid card and the related hidden code (4) in order to claim the win and the collection of the winnings.

2. A method of using an interactive and telematic system for the automatization of the stakes in games based on forecasts, wherein said system comprises:
I) a Service Center;
II) a public wide area network to interconnect the user to the Service Center;
and uses prepaid cards as a payment means; said
Service Center being provided with software means in order to carry out the following method steps:
A) manage the access requests of the users;
B) instruct the user during the whole procedural path which is foreseen for the stake;
B-1) identify the card and check its validity for staking;
B-2) ask the user which type of game he intends to select;
B-3) list all possible variants for a specific game and ask the user to select one stake;
B-4) end the stake procedure with a confirmation,
B-5) transmit to the user the "receipt" of the stake through a communication of an identification number of the stake itself;
C) store all information related to the stakes on unerasable storage media;
**characterized in** marking each of said prepaid cards by an univocal identification number (2) obtained by a specific algorithm from the progressive number (1) of the card, and by a set of secret codes for security and confirmation contained in a matrix (mxn), (3) which are to be communicated to the Service Center in order to participate to a single stake and for the validation of the card, further providing said cards with at least a hidden code (4) which is uncovered at the time the winnings are collected, an identification number which is associated to the stake, the prepaid card, and the hidden code of the latter, being used as security and validation means in order to collect the winnings, and in performing for each stake an interactive dialogue with the user, involving a sequence of steps in which:
I) the user, who is connected to the Service Center, is enabled to the stake, through the transmission of the univocal identification number (2) to the Service Center.
II) the user is interactively instructed until he communicates the kind of stake he is interested in, and further, until he performs the stake itself;
III) for the validation of the stake, the service Center asks for the secret code contained in the matrix (mxn) (3) of the prepaid card,
IV) the Service Center communicates to the user the identification number associated to the stake, which forms the receipt.

3. A method using an interactive and telematic system for the automatization of the stakes in games based on forecasts, according to claim 1, **characterized in that** as external means or document put in circulation and having a validity and safety which is assured by a public entity, the method uses a banknote and its associated series number.

4. A method using an interactive and telematic system for the automatization of the stakes in games based on forecasts, according to claims 1 and 2, **characterized in that** the interactive dialogue between the Service Center and the user through the telephone apparatus, occurs by keying in specific characters or combinations of digits, by the user.

5. A method using an interactive and telematic system for the automatization of the stakes in games based on forecasts, according to claims 1 and 2, **characterized in that** the interactive telephonic dialogue between the Service Center and the user, occurs through the exchange of voice messages between the user and a voice recognition system of the Service Center.

6. A method using an interactive and telematic system for the automatization of the stakes in games based on forecast, according to claims 1, 2, **characterized in** preparing and transmitting the stake through a transmitting device which includes a keyboard and a display, and which comprises firmware means suited to the specific game, thereby helping the player in the off-line preparation of the stake; wherein said device, after the connection with the Service Center is established, will be put in proximity with the microphone of the telephone apparatus, and transmits, after a pressure is exerted on a push button, a unique DTMF sequence which comprises both the stake and the safety codes associated with the prepaid card and with the stake.

7. A method using an interactive and telematic system for the automatization of the stakes in games based on forecast, according to claims 1, 2 and 6, **characterized in** employng the transmission device by itself as the payment means allowing the access to the game, due to the fact that the device has stored all safety codes, including one or more identification keys for accessing to the game.

8. A method using an interactive and telematic system for the automatization of the stakes in games based on forecast, according to claims 1, 2 and 6, **characterized in** using a transmission device of a rechargeable kind, according to a predetermined or variable amount of money.

9. A method using an interactive and telematic system for the automatization of the stakes in games based on forecast, according to claims 1, 2 and 6, **characterized in** performing the transfer of information related to the stake by means of the transmission device, according to encrypted codes, wherein the access and utilization keys are totally unknown to the owner.

10. A method using an interactive and telematic system for the automation of the stakes in games based on forecasts, according to claims 1 and 2, **characterized in** realizing the public wide area network for interconnecting the user to the Service Center on a fixed telephone line.

11. A method usig an interactive and telematic system for the automatization of the stakes in games based on forecasts, according to claims 1 and 2, **characterized in** realizing the public wide area network for interconnecting the user to the service Center, by wireless communication.

12. A method using an interactive and telematic system for the automatization of the stakes in games based on forecasts, according to claims 1 and 2, **characterized in** storing the data related to the stake itself together with those associated to the prepaid card and reducing correspondigly the value of the prepaid card following the confirmation of each stake.

13. A method using an interactive and telematic system for the automatization of the stakes in games based on forecasts, according to the preceding claims, **characterized in** enable the user to check at any time his stake by means of the identification number which is associated to the stake itself, by calling again the Service Center.

14. A method using an interactive and telematic system for the automatization of the stakes in games based on forecasts, according to previous claims, **characterized in that** the identification number associated to the stake, is made to coincide with the secret code which is read on one of the cells of the (mxn) matrix (3) of the prepaid card and which is communicated to the Service center at the time the stake is performed.

15. A method using an interactive and telematic system for the automatization of the stakes in games based on forecasts, according to the preceding claims, **characterized in** comprising the univocal card identification number (2), the number of stakes and their contents, the secret code (4), the stake identification number and the hidden code, the game number and the hour and date of the stake into the information associated to the single stake and which is stored for the scrutiny.

16. A method using an interactive and tetematic system for the automatization of the stakes in games based on forecasts, according to the preceding claims, **characterized in that** the operator checks without assistance and in real time, that the identification data correspond to those communicated to him by the Service center, in order to be able also to register the payment operation during the collection of the winnings in any office which serves for that purpose and where the user produces his card.

17. A method using a prepaid card for an interactive and telematic system for the automatization of the stakes in games based on forecasts, according to any of the preceding claims, **characterized in** providing different types of stakes and stake numbers or combinations with a unique format.

## Patentansprüche

1. Verfahren unter Verwendung eines interaktiven und telematischen Systems für die Automatisierung des Wetteinsatzes in Vorhersagespielen, wobei das System Folgendes umfasst:
I) eine Dienstzentrale,
II) ein öffentliches Fernnetz, um den Benutzer mit der Dienstzentrale zu verbinden,
und vorausbezahlte Karten als Zahlungsmittel verwendet, wobei die Dienstzentrale zur Durchführung der folgenden Verfahrensschritte mit Software-Mitteln ausgestattet ist:
A) die Zugriffsanforderungen der Benutzer verwalten,
B) den Benutzer während des gesamten für den Wetteinsatz vorausgesehenen Verfahrenswegs anweisen,
B-1) die Karte identifizieren und ihre Gültigkeit für den Wetteinsatz prüfen,
B-2) den Benutzer fragen, welche Art von Spiel er wählen will,
B-3) alle möglichen Varianten für ein bestimmtes Spiel auflisten und den Benutzer bitten, einen Wetteinsatz zu wählen,
B-4) das Wetteinsatzverfahren mit einer Bestätigung beenden,
C) alle Informationen in Verbindung mit dem Wetteinsatz in nicht löschbaren Speichermedien speichern,
**dadurch gekennzeichnet, dass** jede der vorausbezahlten Karten mit einer eindeutigen Identifikationsnummer (2) markiert wird, die durch einen spezifischen Algorithmus von der progressiven Zahl (1) der Karte erhalten wird, die Karte mit mindestens einem versteckten Kode (4) versehen wird, der zum Zeitpunkt des Kassierens des Gewinns aufgedeckt wird, und für jeden Wetteinsatz ein interaktiver Dialog mit einer Abfolge von Schritten mit dem Benutzer geführt wird, wobei
I) durch die Übermittlung der eindeutigen Identifikationsnummer (2) an die Dienstzentrale der Wetteinsatz an den mit der Dienstzentrale verbundenen Benutzer freigegeben wird,
II) der Benutzer interaktiv angewiesen wird, bis er die Art von Wetteinsatz, an der er interessiert ist, mitteilt, und weiter, bis er den Wetteinsatz selbst durchführt,
III) die Dienstzentrale für die Validierung des bereits erstellten Wetteinsatzes eine Wetteinsatzgeheimzahl anfordert, die vom Spieler geliefert wird und die eindeutig und leicht nachprüfbar ist, weil sie einer beliebigen Art von externem Mittel oder Dokument zugeordnet ist, das in Umlauf gebracht wird und dessen Gültigkeit und Sicherheit von einer Behörde garantiert ist,
IV) das externe Mittel, von dem die vom Spieler an die Dienstzentrale gelieferte Wetteinsatzgeheimzahl erhalten wird, zum Zeitpunkt der Wetteinsatzvalidierung zusammen mit der vorausbezahlten Karte und dem zugeordneten versteckten Kode (4) verwendet wird, um den Gewinn zu beanspruchen und zu kassieren.

2. Verfahren unter Verwendung eines interaktiven und telematischen Systems für die Automatisierung des Wetteinsatzes in Vorhersagespielen, wobei das System Folgendes umfasst:
I) eine Dienstzentrale,
II) ein öffentliches Fernnetz, um den Benutzer mit der Dienstzentrale zu verbinden,
und vorausbezahlte Karten als Zahlungsmittel verwendet, wobei die Dienstzentrale zur Durchführung der folgenden Verfahrensschritte mit Software-Mitteln ausgestattet ist:
A) die Zugriffsanforderungen der Benutzer verwalten,
B) den Benutzer während des gesamten für den Wetteinsatz vorausgesehenen Verfahrenswegs anweisen,
B-1) die Karte identifizieren und ihre Gültigkeit für den Wetteinsatz prüfen,
B-2) den Benutzer fragen, welche Art von Spiel er wählen will,
B-3) alle möglichen Varianten für ein bestimmtes Spiel auflisten und den Benutzer bitten, einen Wetteinsatz zu wählen,
B-4) das Wetteinsatzverfahren mit einer Bestätigung beenden,
B-5) dem Benutzer die "Quittung" des Wetteinsatzes durch Mitteilung einer Identifikationsnummer des Wetteinsatzes selbst übermitteln,
C) alle Informationen in Verbindung mit dem Wetteinsatz in nicht löschbaren Speichermedien speichern,
**dadurch gekennzeichnet, dass** jede der vorausbezahlten Karten mit einer eindeutigen Identifikationsnummer (2), die durch einen spezifischen Algorithmus von der progressiven Zahl (1) der Karte erhalten wird, und mit einem Satz von in einer Matrix (mxn) (3) enthaltenen Geheimkodes zur Sicherheit und Bestätigung, die der Dienstzentrale mitzuteilen sind, um an einem einzelnen Wetteinsatz teilzunehmen und zur Validierung der Karte, markiert wird, weiterhin die Karten mit mindestens einem versteckten Kode (4) versehen werden, der zum Zeitpunkt des Kassierens des Gewinns aufgedeckt wird, wobei eine dem Wetteinsatz zugeordnete Identifikationsnummer, die vorausbezahlte Karte und deren versteckter Code als Sicherheits- und Validierungsmittel verwendet werden, um den Gewinn zu kassieren, und für jeden Wetteinsatz ein interaktiver Dialog mit einer Abfolge von Schritten mit dem Benutzer geführt wird, wobei
I) durch die Übermittlung der eindeutigen Identifikationsnummer (2) an die Dienstzentrale der Wetteinsatz an den mit der Dienstzentrale verbundenen Benutzer freigegeben wird,
II) der Benutzer interaktiv angewiesen wird, bis er die Art von Wetteinsatz, an der er interessiert ist, mitteilt, und weiter, bis er den Wetteinsatz selbst durchführt,
III) die Dienstzentrale zur Validierung des Wetteinsatzes um den in der Matrix (mxn) (3) der vorausbezahlten Karte enthaltenen Geheimkode bittet,
IV) die Dienstzentrale dem Benutzer die dem Wetteinsatz zugeordnete Identifikationsnummer mitteilt, was die Quittung bildet.

3. Verfahren unter Verwendung eines interaktiven und telematischen Systems für die Automatisierung des Wetteinsatzes in Vorhersagespielen nach Anspruch 1, **dadurch gekennzeichnet, dass** als externes Mittel oder Dokument, das in Umlauf gebracht wird und dessen Gültigkeit und Sicherheit von einer Behörde garantiert ist, eine Banknote und ihre zugeordnete Seriennummer in dem Verfahren verwendet wird.

4. Verfahren unter verwendung eines interaktiven und telematischen Systems für die Automatisierung des Wetteinsatzes in Vorhersagespielen nach Ansprüchen 1 und 2, **dadurch gekennzeichnet, dass** der interaktive Dialog zwischen der Dienstzentrale und dem Benutzer durch das Telefon erfolgt, indem der Benutzer bestimmte Zeichen oder Ziffernkombinationen eintippt.

5. Verfahren unter verwendung eines interaktiven und telematischen Systems für die Automatisierung des Wetteinsatzes in Vorhersagespielen nach Ansprüchen 1 und 2, **dadurch gekennzeichnet, dass** der interaktive Telefondialog zwischen der Dienstzentrale und dem Benutzer durch den Austausch von Sprachmitteilungen zwischen dem Benutzer und einem Spracherkennungssystem der Dienstzentrale erfolgt.

6. Verfahren unter Verwendung eines interaktiven und telematischen Systems für die Automatisierung des Wetteinsatzes in Vorhersagespielen nach Ansprüchen 1 und 2, **dadurch gekennzeichnet, dass** der Wetteinsatz durch eine Übermittlungsvorrichtung vorbereitet und übermittelt wird, die eine Tastatur und eine Anzeige sowie für das spezielle Spiel geeignete Firmware-Mittel umfasst, wodurch dem Spieler bei der Offline-Vorbereitung des Wetteinsatzes geholfen wird, wobei die Vorrichtung nach Herstellung der Verbindung mit der Dienstzentrale in die Nähe des Mikrofons des Telefons gebracht wird und nach Druckausübung auf einen Drucktaster eine eindeutige DTMF-Sequenz übermittelt, die sowohl den Wetteinsatz als auch die der vorausbezahlten Karte und dem Wetteinsatz zugeordneten Sicherheitskodes umfasst.

7. Verfahren unter Verwendung eines interaktiven und telematischen Systems für die Automatisierung des Wetteinsatzes in Vorhersagespielen nach Ansprüchen 1, 2 und 6, **dadurch gekennzeichnet, dass** die Übermittlungsvorrichtung allein als Zahlungsmittel verwendet wird und Zugriff auf das Spiel gestattet, aufgrund der Tatsache, dass die Vorrichtung alle Sicherheitskodes, einschließlich eines oder mehrerer Identifikationsschlüssel für den Zugriff auf das Spiel, gespeichert hat.

8. Verfahren unter Verwendung eines interaktiven und telematischen Systems für die Automatisierung des Wetteinsatzes in Vorhersagespielen nach Ansprüchen 1, 2 und 6, **dadurch gekennzeichnet, dass** ein Übermittlungssystem einer aufladbaren Art gemäß eines vorbestimmten oder variablen Geldbetrags verwendet wird.

9. Verfahren unter Verwendung eines interaktiven und telematischen Systems für die Automatisierung des Wetteinsatzes in Vorhersagespielen nach Ansprüchen 1, 2 und 6, **dadurch gekennzeichnet, dass** der Transfer von mit dem Wetteinsatz in Beziehung stehenden Informationen mit der Übermittlungsvorrichtung gemäß verschlüsselten Kodes durchgeführt wird, wobei die Zugriffs- und Benutzungsschlüssel dem Besitzer völlig unbekannt sind.

10. Verfahren unter Verwendung eines interaktiven und telematischen Systems für die Automatisierung des Wetteinsatzes in Vorhersagespielen nach Ansprüchen 1 und 2, **dadurch gekennzeichnet, dass** das öffentliche Fernnetz zur Verbindung des Benutzers mit der Dienstzentrale auf einer Telefonfestleitung realisiert wird.

11. Verfahren unter Verwendung eines interaktiven und telematischen Systems für die Automatisierung des Wetteinsatzes in Vorhersagespielen nach Ansprüchen 1 und 2, **dadurch gekennzeichnet, dass** das öffentliche Fernnetz zur Verbindung des Benutzers mit der Dienstzentrale über drahtlose Kommunikation realisiert wird.

12. Verfahren unter Verwendung eines interaktiven und telematischen Systems für die Automatisierung des Wetteinsatzes in Vorhersagespielen nach Ansprüchen 1 und 2, **dadurch gekennzeichnet, dass** die mit dem Wetteinsatz selbst in Beziehung stehenden Daten zusammen mit den der vorausbezahlten Karte zugeordneten gespeichert werden und der Wert der vorausbezahlten Karte nach der Bestätigung jedes Wetteinsatzes entsprechend verringert wird.

13. Verfahren unter Verwendung eines interaktiven und telematischen Systems für die Automatisierung des Wetteinsatzes in Vorhersagespielen nach den vorhergehenden Ansprüchen, **dadurch gekennzeichnet, dass** es dem Benutzer ermöglicht wird, jederzeit mittels der dem Wetteinsatz selbst zugeordneten Identifikationsnummer seinen Wetteinsatz zu prüfen, indem er wieder die Dienstzentrale anruft.

14. Verfahren unter Verwendung eines interaktiven und telematischen Systems für die Automatisierung des Wetteinsatzes in Vorhersagespielen nach den vorhergehenden Ansprüchen, **dadurch gekennzeichnet, dass** veranlasst wird, dass die dem Wetteinsatz zugeordnete Identifikationsnummer mit dem Geheimkode zusammenfällt, der auf einer der Zellen der (mxn) Matrix (3) der vorausbezahlten Karte gelesen und der Dienstzentrale zum Zeitpunkt der Durchführung des Wetteinsatzes mitgeteilt wird.

15. Verfahren unter Verwendung eines interaktiven und telematischen Systems für die Automatisierung des Wetteinsatzes in Vorhersagespielen nach den vorhergehenden Ansprüchen, **dadurch gekennzeichnet, dass** die eindeutige Kartenidentifikationsnummer (2), die Anzahl der Wetteinsätze und ihr Inhalt, der Geheimkode (4), die Wetteinsatzidentifikationsnummer und der verdeckte Kode, die Spielnummer sowie die Uhrzeit und das Datum des Wetteinsatzes in den dem einzelnen Wetteinsatz zugeordneten Informationen zusammengefasst werden, die für Überprüfung gespeichert werden,

16. Verfahren unter Verwendung eines interaktiven und telematischen Systems für die Automatisierung des Wetteinsatzes in Vorhersagespielen nach den vorhergehenden Ansprüchen, **dadurch gekennzeichnet, dass** der Bediener ohne Hilfe und in Echtzeit prüft, dass die Identifikationsdaten mit denen übereinstimmen, die ihm von der Dienstzentrale mitgeteilt wurden, sodass er auch den Zahlungsvorgang während des Kassierens des Gewinns in irgendeiner Dienststelle, die diesem Zweck dient und in der der Benutzer seine Karte vorweist, registrieren kann.

17. Verfahren unter Verwendung eines interaktiven und telematischen Systems für die Automatisierung des Wetteinsatzes in Vorhersagespielen nach einem der vorhergehenden Ansprüche, **dadurch gekennzeichnet, dass** unterschiedliche Arten von Wetteinsätzen und Wetteinsatznummern oder -kombinationen mit einem eindeutigen Format bereitgestellt werden.

## Revendications

1. Procédé utilisant un système interactif et télématique pour l'automatisation des paris dans les jeux fondés sur des prévisions, dans lequel ledit système comprend :
I) un Centre de Service
II) un réseau étendu public pour interconnecter l'utilisateur et le Centre de Service ;
et utilise des cartes prépayées comme moyen de paiement ; ledit Centre de Service étant équipé d'un moyen logiciel afin d'exécuter les étapes de procédé suivantes :
A) gérer les demandes d'accès des utilisateurs ;
B) donner des instructions à l'utilisateur durant toute la voie procédurale qui est prévue pour le pari ;
B-1) identifier la carte et vérifier sa validité pour parier ;
B-2) demander à l'utilisateur le type de jeu qu'il a l'intention de sélectionner ;
B-3) énumérer toutes les variantes possibles pour un jeu spécifique et demander à l'utilisateur de sélectionner un pari ;
B-4) terminer la procédure de pari par une confirmation,
C) enregistrer toutes les informations relatives aux paris sur des supports de mémorisation ineffaçables ;
**caractérisé en ce que** chacune des dites cartes prépayées est désignée par un numéro d'identification univoque (2) obtenu par un algorithme spécifique à partir du numéro réfléchi (1) de la carte, ladite carte étant pourvue d'au moins un code caché (4) qui est découvert au moment où les gains sont collectés, et un dialogue interactif étant mené avec l'utilisateur pour chaque pari, impliquant une suite d'étapes dans laquelle :
I) l'utilisateur, qui est connecté au Centre de Service, est autorisé à parier, via la transmission du numéro d'identification univoque (2) au Centre de Service.
II) L'utilisateur reçoit des instructions de façon interactive jusqu'à ce qu'il communique le type de pari qui l'intéresse, et ensuite, jusqu'à ce qu'il effectue le pari lui-même ;
III) le Centre de Service demande la validation du pari déjà réalisé, un code d'identification personnel (CIP) de pari qui est fourni par le joueur et qui est univoque et facilement vérifiable, en raison du fait qu'il est associé à tout type de moyen ou document externe mis en circulation et dont la validité et la sécurité sont garanties par une autorité publique ;
IV) le moyen externe d'où provient le CIP de pari fourni par le joueur au Centre de Service, au moment où le pari est validé, est utilisé conjointement à la carte prépayée et au code caché afférent (4) afin de réclamer le gain et la collecte des gains.

2. Procédé utilisant un système interactif et télématique pour l'automatisation des paris dans les jeux fondés sur des prévisions, dans lequel ledit système comprend :
I) un Centre de Service
II) un réseau étendu public pour interconnecter l'utilisateur et le Centre de Service ;
et utilise des cartes prépayées comme moyen de paiement ; ledit Centre de Service étant équipé d'un moyen logiciel afin d'exécuter les étapes de procédé suivantes :
A) gérer les demandes d'accès des utilisateurs ;
B) donner des instructions à l'utilisateur durant toute la voie procédurale qui est prévue pour le pari ;
B-1) identifier la carte et vérifier sa validité pour parier ;
B-2) demander à l'utilisateur le type de jeu qu'il a l'intention de sélectionner ;
B-3) énumérer toutes les variantes possibles pour un jeu spécifique et demander à l'utilisateur de sélectionner un pari :
B-4) terminer la procédure de pari par une confirmation.
B-5) transmettre à l'utilisateur le « reçu » du pari par la communication d'un numéro d'identification du pari lui-même ;
C) enregistrer toutes les informations relatives aux paris sur des supports de mémorisation ineffaçables ;
**caractérisé en ce que** chacune des dites cartes prépayées est désignée par un numéro d'identification univoque (2) obtenu par un algorithme spécifique à partir du numéro réfléchi (1) de la carte, et par un ensemble de codes secrets pour la sécurité et la confirmation contenus dans une matrice (mxn), (3) qui doivent être communiqués au Centre de Service afin de participer à un seul pari et pour la validation de la carte, lesdites cartes étant en outre dotées d'au moins un code caché (4) qui est découvert au moment où les gains sont collectés, un numéro d'identification qui est associé au pari, la carte prépayée, et le code caché de cette dernière étant utilisé comme moyens de sécurité et de validation afin de collecter les gains, et un dialogue interactif avec l'utilisateur étant mené pour chaque pari, impliquant une suite d'étapes dans lesquelles :
I) l'utilisateur, qui est connecté au Centre de Service, est autorisé à parier, via la transmission du numéro d'identification univoque (2) au Centre de Service.
II) L'utilisateur reçoit des instructions de façon interactive jusqu'à ce qu'il communique le type de pari qui l'intéresse, et ensuite, jusqu'à ce qu'il effectue le pari lui-même ;
III) pour la validation du pari, le Centre de Service demande le code secret contenu dans la matrice (mxn) (3) de la carte prépayée,
IV) le Centre de Service communique à l'utilisateur le numéro d'identification associé au pari, constituant le reçu.

3. Procédé utilisant un système interactif et télématique pour l'automatisation des paris dans les jeux fondés sur des prévisions, selon la revendication 1, **caractérisé en ce que**, comme document ou moyen externe mis en circulation et présentant une validité et une sécurité qui sont garanties par un organisme public, le procédé utilise un billet de banque et son numéro de série associé.

4. Procédé utilisant un système interactif et télématique pour l'automatisation des paris dans les jeux fondés sur des prévisions, selon les revendications 1 et 2, **caractérisé en ce que** le dialogue interactif entre le Centre de Service et l'utilisateur via l'appareil téléphonique, survient en entrant, grâce à des touches, des caractères spécifiques ou des combinaisons de chiffres, par l'utilisateur.

5. Procédé utilisant un système interactif et télématique pour l'automatisation des paris dans les jeux fondés sur des prévisions, selon les revendications 1 et 2, **caractérisé en ce que** le dialogue téléphonique interactif entre le Centre de Service et l'utilisateur, survient via l'échange de messages vocaux entre l'utilisateur et un système de reconnaissance vocale du Centre de Service.

6. Procédé utilisant un système interactif et télématique pour l'automatisation des paris dans les jeux fondés sur des prévisions, selon les revendications 1, 2, **caractérisé en ce que** le pari est préparé et transmis par le biais d'un appareil de transmission qui inclut un clavier et un écran, et qui comprend un moyen de microprogramme adapté au jeu spécifique, aidant ainsi le joueur dans la préparation hors ligne du pari ; dans lequel ledit appareil, une fois que la connexion avec le Centre de Service est établie, est placé à proximité du microphone de l'appareil téléphonique, et transmet, après qu'une pression est exercée sur un bouton-poussoir, une seule séquence DTMF (Dual Tone Multi-Frequency) qui comprend à la fois le pari et les codes de sécurité associés à la carte prépayée et au pari.

7. Procédé utilisant un système interactif et télématique pour l'automatisation des paris dans les jeux fondés sur des prévisions, selon les revendications 1, 2 et 6, **caractérisé en ce que** l'appareil de transmission est employé par lui-même comme moyen de paiement permettant l'accès au jeu, en raison du fait que l'appareil a enregistré tous les codes de sécurité, incluant un code d'identification ou plus pour accéder au jeu.

8. Procédé utilisant un système interactif et télématique pour l'automatisation des paris dans les jeux fondés sur des prévisions, selon les revendications 1, 2 et 6, **caractérisé en ce qu'**un appareil de transmission de type rechargeable est utilisé, selon une somme d'argent prédéterminée ou variable.

9. Procédé utilisant un système interactif et télématique pour l'automatisation des paris dans les jeux fondés sur des prévisions, selon les revendications 1, 2 et 6, **caractérisé en ce que** le transfert d'informations relatives au pari est effectué au moyen de l'appareil de transmission, conformément à des codes chiffrés, dans lequel les codes d'accès et d'utilisation sont totalement inconnus du propriétaire.

10. Procédé utilisant un système interactif et télématique pour l'automatisation des paris dans les jeux fondés sur des prévisions, selon la revendication 1 et 2, **caractérisé en ce que** le réseau étendu public pour interconnecter l'utilisateur et le Centre de Service est réalisé sur une ligne de téléphone fixe.

11. Procédé utilisant un système interactif et télématique pour l'automatisation des paris dans les jeux fondés sur des prévisions, selon la revendication 1 et 2, **caractérisé en ce que** le réseau étendu public pour interconnecter l'utilisateur et le Centre de Service est réalisé par le biais d'une communication sans fil.

12. Procédé utilisant un système interactif et télématique pour l'automatisation des paris dans les jeux fondés sur des prévisions, selon la revendication 1 et 2, **caractérisé en ce que** les données relatives au pari lui-même sont enregistrées avec celles associées à la carte prépayée et la valeur de la carte prépayée est réduite en conséquence, suite à la confirmation de chaque pari.

13. Procédé utilisant un système interactif et télématique pour l'automatisation des paris dans les jeux fondés sur des prévisions, selon les revendications précédentes, **caractérisé en ce que** l'utilisateur est autorisé à vérifier à tout moment son pari au moyen du numéro d'identification qui est associé au pari lui-même, en rappelant le Centre de Service.

14. Procédé utilisant un système interactif et télématique pour l'automatisation des paris dans les jeux fondés sur des prévisions, selon des revendications précédentes, **caractérisé en ce que** le numéro d'identification associé au pari est conçu pour coïncider avec le code secret qui est lu sur l'une des cellules de la matrice (mxn) (3) de la carte prépayée et qui est communiqué au Centre de Service au moment où le pari est effectué.

15. Procédé utilisant un système interactif et télématique pour l'automatisation des paris dans les jeux fondés sur des prévisions, selon les revendications précédentes, **caractérisé en ce qu'**il comprend le numéro d'identification univoque de la carte (2), le nombre de paris et leurs contenus, le code secret (4), le numéro d'identification du pari et le code caché, le numéro de jeu ainsi que l'heure et la date du pari dans l' informati associée au pari unique et qui est enregistrée pour vérification.

16. Procédé utilisant un système interactif et télématique pour l'automatisation des paris dans les jeux fondés sur des prévisions, selon les revendications précédentes, **caractérisé en ce que** l'opérateur vérifie sans assistance et en temps réel, que les données d'identification correspondent à celles qui lui ont été communiquées par le Centre de Service, afin de pouvoir également enregistrer l'opération de paiement pendant la collecte des gains dans tout bureau servant à cette fin et où l'utilisateur produit sa carte.

17. Procédé utilisant une carte prépayée pour un système interactif et télématique pour l'automatisation des paris dans les jeux fondés sur des prévisions, selon l'une des revendications précédentes, **caractérisé en ce qu'**il fournit différents types de paris et nombres ou combinaisons de paris dans un format unique.
